# DEMANDE DE BREVET EUROPEEN

(11) **EP 1 455 165 A1**
(43) Date de publication de la demande: **08.09.2004**
(21) Numéro de dépôt: 03405160.7
(22) Date de dépôt: 07.03.2003
(51) Int. Cl.: G01D 11/24

(54) **Capteur miniaturisé**

(71) Demandeur: Intersema Sensoric SA, 2022 Bevaix (CH)
(72) Inventeur: Bellaar, Pieter, 1936 KM Baambrugge (NL); Knuetel, Manfred, 2022 Bevaix (CH); Gretillat, Marc-Alexis, 2019 Chambrelien (CH)
(74) Mandataire: Gresset, Jean

(57) **Abrégé**

L'invention concerne un capteur miniaturisé comprenant un bâti (10) et, montés sur celui-ci, une puce senseur (15), une puce électronique d'interface (25) et un circuit imprimé souple (17) reliant ensemble les deux puces. Ledit bâti (10) comporte un plateau (11) sur une première face (14) duquel est fixée la puce senseur (15), et un pied (12) solidaire de la deuxième face du plateau, sur lequel est fixée la puce électronique (25).

## Description

La présente invention se rapporte aux capteurs miniaturisés, qui sont des dispositifs comportant essentiellement un élément sensible à un paramètre tel que la pression, l'accélération, la vitesse angulaire, la présence d'un gaz,... et un circuit électronique d'interface couplé à l'élément sensible et délivrant, à une électronique de traitement et d'affichage, un signal représentatif de la valeur de ce paramètre.

L'invention concerne, plus particulièrement, un capteur miniaturisé dont l'élément sensible - ou senseur - et le circuit associé sont réunis en une structure aussi compacte possible, comme cela peut être nécessaire lorsqu'il s'agit, par exemple, de l'intégrer dans une montre bracelet.

Le problème qui se pose généralement avec de tels capteurs est la sensibilité à la température de leurs deux constituants, dont l'électronique de traitement, dotée, par le circuit d'interface, de toutes les informations nécessaires, est capable de compenser les effets.

Il est donc très souhaitable, pour que la compensation des effets de la température soit assurée de manière satisfaisante, que le meilleur couplage possible soit réalisé entre la puce senseur et la puce électronique.

Une solution à ce problème consiste à disposer les deux puces de part et d'autre d'un substrat, par exemple en céramique. Un bon couplage thermique est, certes, obtenu mais une telle construction souffre du fait que la puce électronique a une surface sensiblement plus grande que celle de la puce senseur. Ainsi, la dimension du capteur dans le plan du senseur ne peut pas être aussi réduite que souhaité, ce qui ne facilite pas son intégration, à la fois technique et esthétique, notamment dans la carrure d'une montre bracelet.

La présente invention a pour but de fournir un capteur dont la construction lui permet de réduire au minimum sa face active tout en préservant un excellent couplage thermique entre ses deux puces.

De façon plus précise, l'invention concerne un capteur miniaturisé du type comprenant un bâti et, montés sur celui-ci, une puce senseur, une puce électronique d'interface et un circuit imprimé souple reliant ensemble les deux puces. Selon l'invention, le bâti comporte un plateau sur une première face duquel est fixée la puce senseur, et un pied solidaire de la deuxième face du plateau, sur lequel est fixée la puce électronique.

De façon particulièrement avantageuse, la première face du bâti est percée d'une cavité servant de logement à la puce senseur et son pied est sensiblement perpendiculaire à la deuxième face du plateau.

Le capteur selon l'invention présente encore, séparément ou en combinaison, les caractéristiques suivantes :
- le circuit imprimé souple comporte une tête fixée sur le pourtour de la première face du plateau et dont les pistes sont reliées aux bornes de la puce senseur et, prolongeant la tête, une bande passant sur le côté du plateau puis venant s'appliquer sur son pied;
- la puce électronique d'interface est fixée sur la portion de la bande qui est appliquée sur le pied;
- la bande s'étend au-delà du pied et se termine par des plages conductrices pour la connexion du circuit souple à l'extérieur;
- le bâti est réalisé en un métal bon conducteur thermique;
- le plateau est de forme cylindrique et le pied de forme parallélépipédique, celui-ci prolongeant le plateau selon un de ses diamètres;
- le plateau comporte un méplat ménagé sur sa face latérale circulaire, dans lequel passe la bande du circuit imprimé souple;
- il est prévu un capot coiffant le plateau.

D'autres caractéristiques de l'invention ressortiront de la description qui va suivre, faite en regard du dessin annexé, dans lequel :

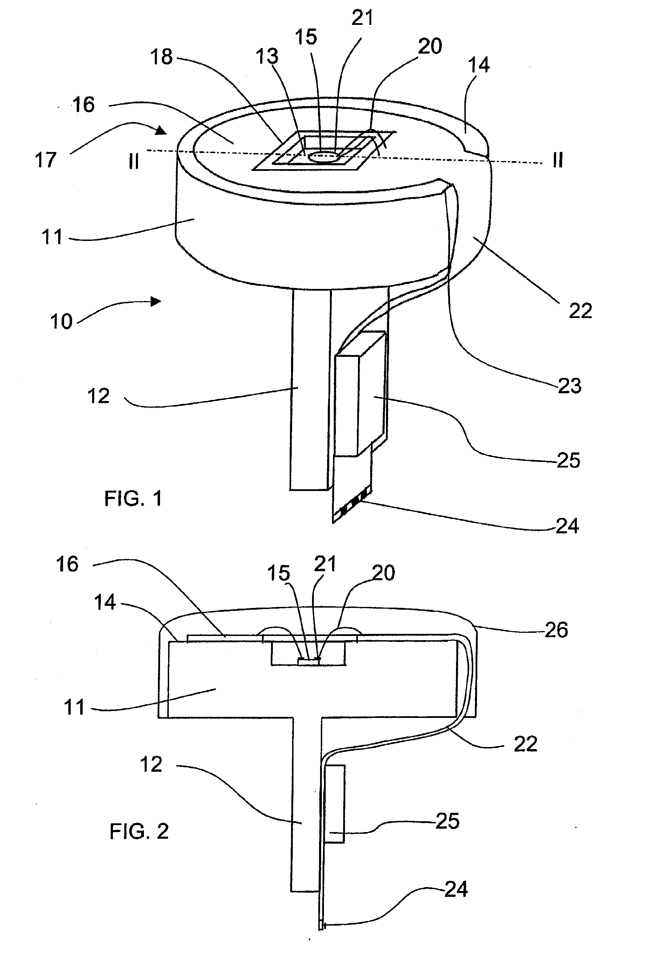

- la figure 1 est une vue en perspective d'une forme de réalisation avantageuse du capteur selon l'invention; et
- la figure 2 est une vue en coupe selon II-II de ce capteur.

Les figures montrent que le capteur selon l'invention comporte un bâti monobloc 10 avantageusement réalisé en un métal bon conducteur thermique, tel que l'acier inox. Ce bâti a la particularité de posséder un plateau 11, de forme cylindrique, et un pied 12, de forme parallélépipédique, prolongeant la partie principale selon un diamètre de celle-ci et perpendiculairement à elle.

Typiquement, et à titre purement indicatif, la tête 11 a un diamètre de 4mm et une épaisseur de 1.1 mm, alors que le pied 12 a une longueur de 4.5mm, une largeur de 3.5mm et une épaisseur de 0.75mm.

La tête 11 comporte une cavité centrale 13 ouverte sur sa face 14 opposée au pied 12 et servant de logement pour un senseur de pression miniaturisé 15, collé sur son fond. Ce senseur est, par exemple de type piézo-résistif, tel que celui commercialisé par la demanderesse sous la référence MS 7801.

La tête 16 d'un circuit imprimé souple 17, communément appelé flex, dotée d'une découpe 18 de même contour que la cavité 13, est fixée par collage sur le pourtour de la face 14 du bâti. Le flex comporte un réseau de pistes conductrices qui sont prolongées, à l'intérieur de la découpe 18, par des fils 20 soudés sur les bornes de contact 21 du senseur.

La tête 16 du flex se prolonge par une bande souple 22 passant dans un méplat 23 ménagé sur la face latérale circulaire du bâti, puis venant s'appliquer sur le pied 12 auquel elle est également fixée par collage. La bande 22 s'étend au-delà du pied et se termine par des plages conductrices 24 servant, de manière classique, à relier à l'extérieur les pistes du circuit souple 17.

Dans sa portion appliquée contre le pied 12, le flex 17 reçoit une puce électronique 25 qui sert, de manière connue, de circuit d'interface pour le senseur 15. Lorsque celui-ci est de type piézo-résistif, la puce 25 est, par exemple, le circuit A/D utilisé dans les modules d'Intersema. La connexion de la puce aux pistes du flex est avantageusement réalisée selon le mode dit « flip-chip » mais elle peut aussi se faire, de manière plus classique, à l'aide de fils conducteurs, selon le mode dit « wire bonding ».

Enfin, la partie principale 11 du bâti est coiffée par un capot 26 réalisé en un matériau ne perturbant pas la capacité du senseur 15 à exercer sa fonction. Ce capot est, par exemple, fixé par collage sur la face latérale circulaire du bâti.

Ainsi est proposé un capteur miniaturisé dont la face active, c'est-à-dire celle qui doit être dirigée vers l'extérieur et donc être nécessairement visible, est réduite au strict minimum. L'intégration du capteur dans un petit objet, tel qu'une montre, est ainsi facilitée, tant du point de vue technique que du point de vue esthétique. On remarquera, notamment, que le montage du capteur dans la carrure de la montre peut se faire de l'extérieur. La partie principale 11 du bâti prend alors place dans un logement ad'hoc et le pied 12, doté de la puce 25, pénètre à l'intérieur du boîtier pour permettre la connexion de son flex 17 au circuit interne de la pièce d'horlogerie.

Une telle construction ne lèse en rien la qualité du couplage thermique entre le senseur 15 et sa puce 25 puisque ces deux composants sont intimement liés au bâti monobloc 10.

La présente description a été faite en se référant à un capteur de pression piézo-résistif. Il va de soi que l'invention s'applique aussi, non seulement, à un capteur de pression capacitif mais, aussi, à tout autre type de capteur miniaturisé dans lequel la partie active visible doit être la plus petite possible tout en assurant un bon couplage thermique entre le senseur et sa puce électronique d'interface.

## Revendications

1. Capteur miniaturisé comprenant un bâti (10) et, montés sur celui-ci, une puce senseur (15), une puce électronique d'interface (25) et un circuit imprimé souple (17) reliant ensemble les deux puces, **caractérisé en ce que** ledit bâti (10) comporte un plateau (11) sur une première face (14) duquel est fixée la puce senseur (15), et un pied (12) solidaire de la deuxième face du plateau, sur lequel est fixée la puce électronique (25).

2. Capteur selon la revendication 1, **caractérisé en ce que** la première face (14) du bâti est percée d'une cavité (13) servant de logement à la puce senseur (15).

3. Capteur selon l'une des revendications 1 et 2, **caractérisé en ce que** le pied (12) du bâti est sensiblement perpendiculaire à la deuxième face du plateau.

4. Capteur selon l'une des revendications 1 à 3, **caractérisé :**
- **en ce que** le circuit imprimé souple (17) comporte une tête (16) fixée sur le pourtour de la première face (14) du plateau (11) et dont les pistes sont reliées aux bornes (21) de la puce senseur (15) et, prolongeant ladite tête, une bande (22) passant sur le côté du plateau (11 ) puis venant s'appliquer sur son pied (12), et
- **en ce que** la puce électronique d'interface (25) est fixée sur la portion de la bande (22) qui est appliquée sur le pied (12).

5. Capteur selon la revendication 4, **caractérisé en ce que** ladite bande (22) s'étend au-delà du pied (12) et se termine par des plages conductrices (24) pour la connexion du circuit souple à l'extérieur.

6. Capteur selon l'une des revendications 1 à 5, **caractérisé en ce que** le bâti (10) est réalisé en un métal bon conducteur thermique.

7. Capteur selon l'une des revendications 1 à 6, **caractérisé en ce que** le plateau (11) est de forme cylindrique et le pied (12) de forme parallélépipédique, celui-ci prolongeant le plateau selon un de ses diamètres.

8. Capteur selon la revendication 7, **caractérisé en ce que** le plateau (11) comporte un méplat (23) ménagé sur sa face latérale circulaire, dans lequel passe la bande (22) du circuit imprimé souple.

9. Capteur selon l'une des revendications 1 à 8, **caractérisé en ce qu'**il comporte un capot (26) coiffant le plateau (11).
